Europäisches Patentamt

European Patent Office

Office européen des brevets

(19)

(11) Veröffentlichungsnummer: **0 269 990 B1**

(12) **EUROPÄISCHE PATENTSCHRIFT**

(45) Veröffentlichungstag der Patentschrift: **22.01.92**

(51) Int. Cl.5: **E04B 1/80**, E04C 2/16

(21) Anmeldenummer: **87117384.5**

(22) Anmeldetag: **25.11.87**

(54) **Bausatz aus Leichtbauteilen für Wände, Stützen, Decken und sonstigen Bauteilen sowie Leichtbauplatte.**

(30) Priorität: **03.12.86 DE 8632320 U**
**12.05.87 DE 8706757 U**

(43) Veröffentlichungstag der Anmeldung:
**08.06.88 Patentblatt 88/23**

(45) Bekanntmachung des Hinweises auf die
Patenterteilung:
**22.01.92 Patentblatt 92/04**

(84) Benannte Vertragsstaaten:
**AT BE CH DE ES FR GB GR IT LI LU NL SE**

(56) Entgegenhaltungen:
**DE-C- 950 409**
**DE-U- 8 536 156**
**FR-A- 2 081 257**

(73) Patentinhaber: **Kakuk, Stefan**
**Brunnenstrasse 5**
**W-6839 Oberhausen(DE)**

(72) Erfinder: **Kakuk, Stefan**
**Brunnenstrasse 5**
**W-6839 Oberhausen(DE)**

(74) Vertreter: **Ratzel, Gerhard, Dr.**
**Seckenheimer Strasse 36a**
**W-6800 Mannheim 1(DE)**

## Beschreibung

Die Erfindung betrifft Leichtbauteile für Wände, Stützen, Decken und sonstige Bauteile, bestehend aus Strohhalm-Teilstücken, die durch Bindemittel verbunden sind.

Heute verwendete Bauteile sollen hinsichtlich der Verarbeitung wirtschaftliche Eigenschaften aufweisen. So ist es von Vorteil, wenn diese Bauteile schall- und wärmedämmende Eigenschaften aufweisen, hierbei aber auch nicht brennbar sind und umweltfreundliches Grundmaterial verwendet wird.

Bezüglich der Wirtschaftlichkeit dürfen die auf der Baustelle auftretenden Probleme, wie leichte Verarbeitbarkeit, Beweglichkeit usw. nicht unbeachtet bleiben.

Nicht zu letzt sollten die verwendeten Bauteile den erforderlichen statischen Verhältnissen gerecht werden, was bei den heute verwendeten Bauteilen nur teilweise der Fall ist.

Der Erfindung liegt daher die Aufgabe zugrunde, Bauteile der eingangs genannten Gattung bereit zu stellen, die aus umweltfreundlichem, nicht entflammbarem Baustoff geschaffen sind, die ferner wärmedämmend sind und die den statischen Verhältnissen angepasst werden können.

Diese Aufgabe wird erfindungsgemäß dadurch gelöst, daß Leichtbauteile für Wände, Stützen, Decken und sonstige Bauteile, bestehend aus Strohhalm-Teilstücken, die durch Bindemittel verbunden sind, vorgeschlagen werden, bei denen die längsgespalteten Strohhalm-Teilstücke mit einem wasserabstoßenden Mittel imprägniert sind und der Leichtbauteilkorpus mit sich in Längsrichtung des Bauteils erstreckenden Luftkammern versehen ist.

Vorteilhafte weitere Ausgestaltungen sind Gegenstand der Ansprüche 2 - 18.

Die erfindungsgemäßen Leichtbauteile können insbesondere bei ihrer Ausgestaltung als Platte als Sandwich-Platte, als Paneele und als Dämmplatte ausgebildet sein.

Nach den heutigen Anforderungen sollen Bauteile, also auch Leichtbauteile insbesondere in Plattenform möglichst aus sogenannten biologischen Rohstoffen hergestellt werden, um umweltfreundliche Eigenschaften zu haben; sie sollen ferner möglichst schalldämmende und wärmedämmende Eigenschaften aufweisen. Ferner sollen die Bauteile möglichst schwer entflammbar, wasserabweisend, wasserfest und möglichst auch nicht brennbar sein. Alle diese Anforderungen werden von den erfindungsgemäßen Leichtbauteilen erfüllt.

Weitere Vorteile der erfindungsgemäßen Leichtbauteile bestehen darin, daß sie leicht verarbeitbar sind undzwar vorzugsweise im trockenen Verfahren unter Einsatz von einfachen Handwerkszeugen und daß sie gleichzeitig hart aber mit einfachen Handwerkszeugen wie Säge und Bohrer optimal bearbeitbar sind.

Durch ihren Strohanteil besitzen die erfindungsgemäßen Leichtbauteile ferner eine ausgezeichnete Wärme - und Schalldämmung, eine hervorragende Zugfestigkeit, eine überraschend hohe Bruchfestigkeit und eine große Atmungsfähigkeit sowie, infolge ihrer biologischen Eigenschaften, eine Umweltfreundlichkeit.

Die Vorbehandlugn der Strohhalmstücke geschicht mit ansich bekannten Mitteln, die die gewünschten Eigenschaften wie schwere Entflammbarkeit, Wasserabweisung und dergleichen bewirken. Diese Mittel sind dem Stand der Technik für cellulosehaltige Elemente ansich bekannt.

Die Verbindung der vorbehandelten Strohhalm-Teilstücke beispielsweise zur Raumform der Leichtbauplatte, geschieht unter Anwendung ansich bekannter, für diesen Zweck geeigneter Klebstoffe bzw. Bindemittel, gegebenenfalls unter Anwendung von Hitze und Druck nach ansich bekannten Verfahren.

Zum nächstkommenden Stand der Technik sind zu nennen: DE-C-950 409 und FR-A-2 081 257.

Die DE-C-950 409 beschreibt ein Verfahren zur Herstellung von Leichtbaukörpern, das dadurch gekennzeichnet ist, daß Materialien pflanzlicher Herkunft, wie Faserstoffe, Kork, Torfmull, zusammen mit mineralischen Stoffen wie Sand, Ton, Gips, Asbest, sowie mit Pflanzenmehl und gegebenenfalls mit Farbpigmenten und Bindemittelzusätzen, wie Wasserglas, mit Kunstharzen als Bindemittel durch Pressen verformt werden.

Bei der Lehre gemäß DE-C-950 409 sind mineralische Stoffe wie Sand, Ton, Gips, Asbest essentielle Bestandteile, wohingegen eine Imprägnierung mit einem wasserabstoßenden Mittel und sich in Längsrichtung des Bauteils erstreckende Luftkammern nicht beschrieben oder nahegelegt sind.

Die FR-A-2 081 257 beschreibt eine lediglich selbsttragende Wärmeisolier- und Schalldämmplatte aus Fasern und Holzteilchen, Stroh und Kork, die nicht dazu bestimmt und dafür geeignet ist, statische Belastungen aufzunehmen. Auch die sich in Längsrichtung des Bauteils erstreckenden Luftkammern sind bei den Platten gemäß FR-A-2 081 257 weder vorbeschrieben noch nahegelegt, wobei gerade auch diese Luftkammern beim Erfindungsgegenstand abgesehen von der Gewichtseinsparung auch deshalb einen besonderen fortschritlichen technischen Effekt bewirken, weil durch sie eine statische Erschütterungsfestigkeit der Leichtbauteile bewirkt wird, weil die Erschütterungswellen leichter zum Rand hin abgeleitet werden.

Anhand der beigefügten Zeichnungen, die besonders bevorzugte Ausführungsformen der Erfindung zeigen, wird diese nun näher erläutert. Dabei zeigen:

| Figur 1 | eine Leichtbauplatte mit beidseitigem Falz und Luftkammern; |
|---|---|
| Figur 2 | eine Leichtbauplatte mit einem auf drei Kanten umlaufenden Falz und auf einer Kante befindlichen Nut; |
| Figur 3 | die Leichtbauplatte aus Figur 2 im Schnitt; |
| Figur 4 | eine Seitenansicht von Figur 2; |
| Figur 5 | die Leichtbauplatte mit gegenseitig angeordneten Falz und an einer Kante angeordneten Nut; |
| Figur 6 | die Leichtbauplatte aus Figur 5 im Schnitt; |
| Figur 7 | die Leichtbaupaltte mit abgeschrägter Falzinnenkante; |
| Figur 8 | die Leichtbauplatte aus Figur 7 im Schnitt; |
| Figur 9 | ein Ausführungsbeispiel eines montierten Bausatzes mit verschiedenen Bauteilen; |
| Figur 10 | bis |
| Figur 14 | weitere Profilausführungsbeispiele. |

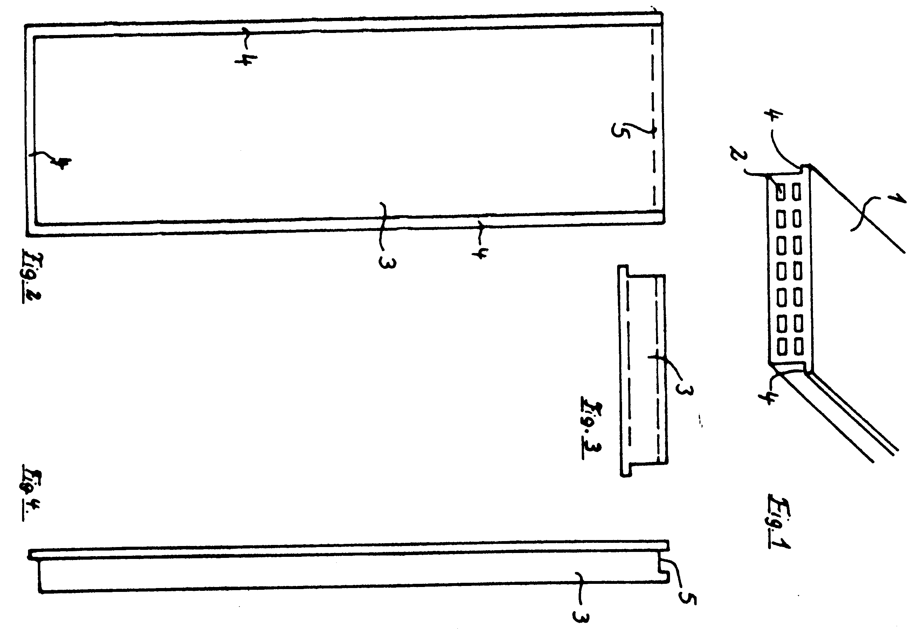

Figur 1 zeigt eine Leichtbauplatte 1 mit beidseitigem Falz 4 in perspektivischer Darstellung, bei der der Korpus mit Luftkammern 2 versehen ist. Durch die Anordnung dieser Luftkammern 2 verringert sich zusätzlich das Eigengewicht der Leichtbauplatte 1. Darüberhinaus wird die Platte 1 noch atmungsfähiger, ohne die Schall- und Wärmedämmeigenschaften zu verlieren.

Figur 2 zeigt eine Leichtbauplatte 3, bei der der Falz 4 drei Kanten umläuft und sich in der Stirnseite eine Nut 5 befindet.

Figur 3 zeigt die in Figur 2 dargestellte Leichtbauplatte 3 im Schnitt.

Figur 4 zeigt die Seitenansicht der in Figur 2 dargestellten Leichtbauplatte, bei der die Nut 5 deutlich zu erkennen ist.

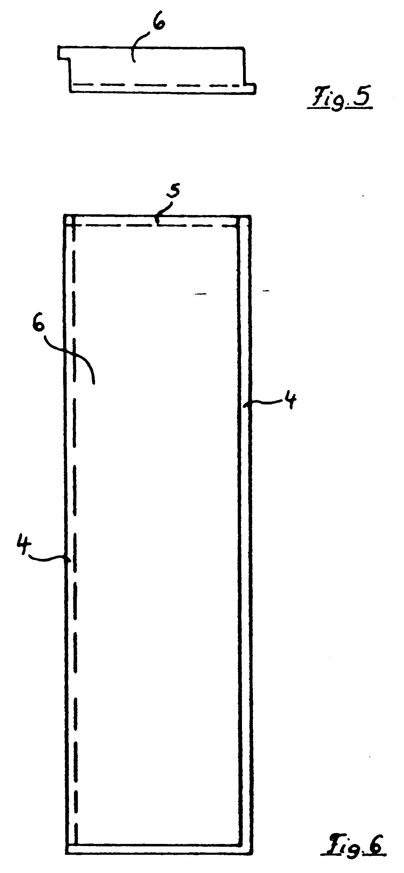

Figur 5 zeigt eine Leichtbauplatte 6 mit gegenseitig angeordnetem Falz 4, wobei wiederum an einer Stirnseite eine Nut 5 angeordnet ist.

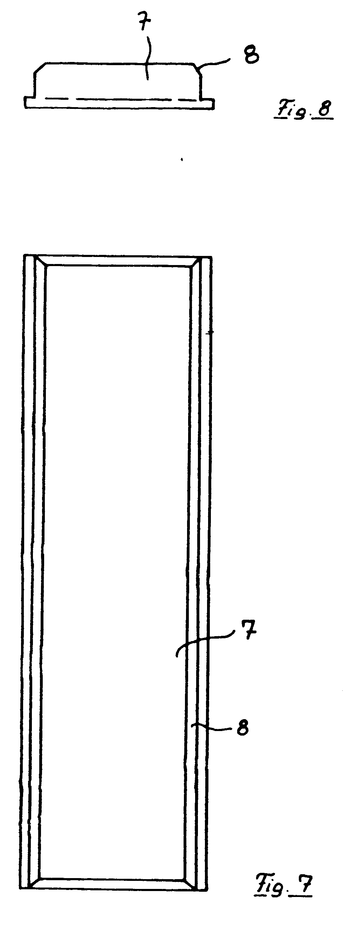

Figur 6 zeigt die in Figur 5 dargestellte Leichtbauplatte im Schnitt.

Figur 7 zeigt eine Leichtbauplatte 7, bei der die Falzinnenkante eine Abschrägung 8 aufweist. Die Ausführungsart wird zur Erstellung von Fachwerkwänden oder Holzbalkendecken verwendet.

Figur 8 zeigt die in Figur 7 dargestellte Leichtbauplatte 7 im Schnitt, bei der die Abschrägung 8 erkennbar ist.

Figur 9 zeigt die in Figur 1 bis 8 vorgenannten Bauteile in einem Montagebeispiel.

Es ist eine besondere Eigenart der Erfindung, daß die Bauteile 3, 6 und 7 nicht nur nebeneinander sondern auch gegenüberliegend montiert werden können. Durch Verwendung eines entsprechenden Verbindungsstücks 14 entsteht zwischen den Bauteilen ein Spalt 15, der wiederum mit Wärme- oder Schalldämm-Material verfüllt werden kann.

Die eingesetzten Holzleisten 16 können ebenso wie die Abschrägungen 8 konstruktive oder auch optisch ästhetische Aufgaben übernehmen.

Die Figuren 10 - 14 zeigen weitere Ausführungsbeispiele der Erfindung.
So kann z. B. das in Figur 10 dargestellte Rechteckbzw. Vierkantrohrprofil 9 als Stütze senkrecht aufgestellt werden oder als Wandschalung, Montage- und/oder Lüftungsschaft beliebig verwendet werden.

Das in Figur 11 gezeigte U-Profil 10 eignet sich vorzugsweise als Schalung für Betonstürze und Unterzüge, sowie als Verkleidung von Installationen aber auch als Installationsschacht.

Figur 12 zeigt ein Ausführungsbespiel der Erfindung, bei der das Bauelement die Form eines hohlen Trapez 11 einnimmt. Dieses Profil wird für die Errichtung von Hohlkörperdecken verwendet.

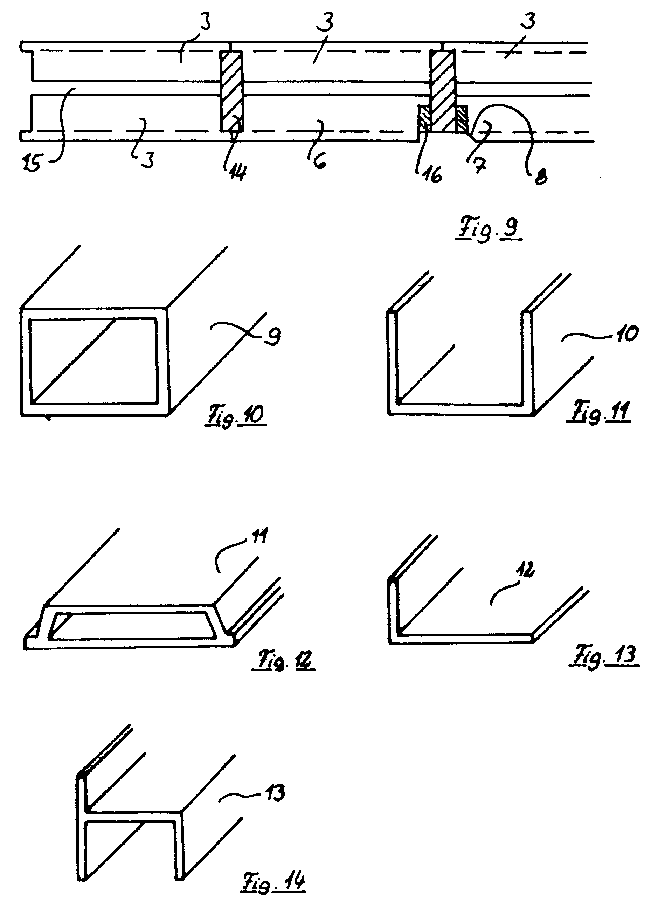

Figur 13 zeigt ein Winkelprofil 12 und eignet sich zur Verkleidung von Installationen, als Abschalung von Betondecken und als Verkleidung von Bauteilen, wie z. B. Flachdachkanten.

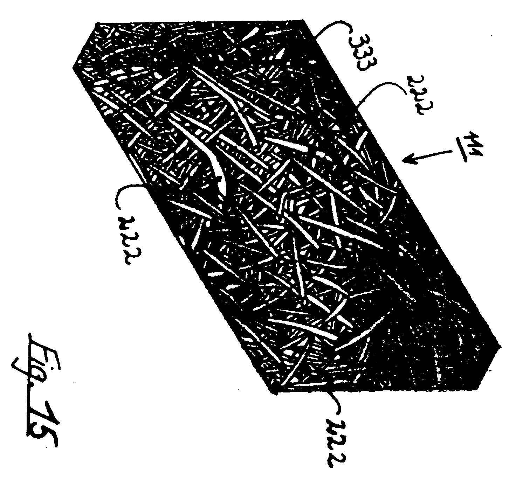

Figur 14 stellt ein für Rolladenkästen mit der Deckenabschalung geeignetes h-Profil 13 dar.

All die vorgenannten Profilbeispiele weisen hervorragende Wärme- und Schalldämmeigenschaften auf und lassen sich je nach den statischen Erfordernissen in ihrer Formgebung verändern.

Selbstverständlich besteht die Möglichkeit alle Bauteile an den entsprechenden Fronten mit Materialien zu beschichten, die den Witterungsverhältnissen und den optischen Vorstellung entsprechen.

In Figur 15 ist mit dem Bezugszeichen 111 ein Ausführungsbeispiel des Erfindungsgegenstandes, nämlich die Leichtbauplatte in Gestalt eines flachen Quaders dargestellt.

Mit dem Bezugszeichen 222 sind die Strohhalm-Teilstücke gekennzeichnet, die durch das in den Zwischenräumen zwischen den Strohhalm-Teilstücken angeordnete verfestigte Bindemittel 333 zusammengehalten werden.

## Patentansprüche

1. Leichtbauteile für Wände, Stützen, Decken und sonstige Bauteile, bestehend aus Strohhalmteilstücken, die durch Bindemittel verbunden sind,
dadurch gekennzeichnet,
daß die längsgespalteten Strohhalmteilstücke mit einem wasserabstoßenden Mittel imprägniert sind und der Leichtbauteilkorpus mit sich in Längsrichtung des Bauteils erstreckenden Luftkammern versehen ist.

2. Leichtbauteile nach Anspruch 1,

dadurch gekennzeichnet,
daß sie die Form einer Platte (1) aufweisen, deren Korpus mit Luftkammern (2) versehen ist.

3. Leichtbauteile nach Anspruch 1 - 2,
dadurch gekennzeichnet,
daß sie die Form einer Platte (3) mit einem auf drei Kanten umlaufenden Falz (4) und auf einer Kante befindlichen Nut (5) aufweisen.

4. Leichtbauteile nach Anspruch 1 - 2,
dadurch gekennzeichnet,
daß sie die Form einer Platte (6), die einen gegenseitig angeordneten Falz (4) und an einer Kante eine Nut (5) aufweisen.

5. Leichtbauteile nach Anspruch 1 - 2,
dadurch gekennzeichnet,
daß sie die Form einer Platte (7) aufweisen, deren Falzinnenkante eine Abschrägung (8) aufweist.

6. Leichtbauteile nach Anspruch 1,
dadurch gekennzeichnet,
daß sie die Form eines Rechteckrohres (9) aufweisen.

7. Leichtbauteile nach Anspruch 1,
dadurch gekennzeichnet,
daß sie eine U-Form (10) aufweisen.

8. Leichtbauteile nach Anspruch 1,
dadurch gekennzeichnet,
daß sie als hohlförmiges Trapez (11) mit beidseitigem Falz (4) ausgebildet sind.

9. Leichtbauteile nach Anspruch 1,
dadurch gekennzeichnet,
daß sie als Winkel (12) ausgebildet sind.

10. Leichtbauteile nach Anspruch 1,
dadurch gekennzeichnet,
daß sie h-förmig (13) ausgebildet sind.

11. Leichtbauteile nach Anspruch 1 - 10,
dadurch gekennzeichnet,
daß sie mindestens an einer Frontfläche mit optischem oder witterungsbeständigem Material beschichtet sind.

12. Leichtbauteile nach Anspruch 1 - 11,
dadurch gekennzeichnet,
daß sie mit ansich bekannten Mitteln endbeschichtet sind.

13. Leichtbauteile nach Anspruch 12,
dadurch gekennzeichnet,

daß sie mit Sperrholt beschichtet sind.

14. Leichtbauteile nach Anspruch 12,
dadurch gekennzeichnet,
daß sie mit Furnier beschichtet sind.

15. Leichtbauteile nach Anspruch 12,
dadurch gekennzeichnet,
daß sie mit Folie beschichtet sind.

16. Leichtbauteile nach Anspruch 12,
dadurch gekennzeichnet,
daß sie mit Pappe beschichtet sind.

17. Leichtbauteile nach Anspruch 12,
dadurch gekennzeichnet,
daß sie eine Anstrichbeschichtung aufweisen.

18. Leichtbauteile nach Anspruch 12 - 17,
dadurch gekennzeichnet
daß die Strohhalm-Teilstücke mit einem ansich bekannten flammhemmenden Mittel vorbehandelt und/oder überzogen und/oder imprägniert sind.

**Claims**

1. Light-weight components for walls, columns, ceilings and other components, comprising straw stalk fragments which are bound by a binding agent, characterised in that the longitudinally split straw stalk fragments are impregnated with a water-repellent agent and the lightweight component body is provided with air chambers extending in the longitudinal direction of the component.

2. Lightweight components according to Claim 1, characterised in that they are in the form of a board (1), the body of which is provided with air chambers (2).

3. Lightweight components according to Claims 1 and 2,
characterised in that they are in the form of a board (3) with a rebate (4) extending along three edges and with a groove (5) situated on one edge.

4. Lightweight components according to Claims 1 and 2,
characterised in that they are in the form of a board (6) with oppositely arranged rebates (4) and with a groove (5) on one edge.

5. Light-weight components according to Claims 1 and 2,
characterised in that they are in the form of a board (7) having a rebate whose inner edge has a bevel (8).

6. Light-weight components according to Claim 1, characterised in that they are in the form of a rectangular tube (9).

7. Light-weight components according to Claim 1, characterised in that they are U-shaped (10).

8. Light-weight components according to Claim 1, characterised in that they are in the form of a hollow trapezium (11) with a rebate (4) on either side.

9. Light-weight components according to Claim 1, characterised in that they are in the form of an angle member (12).

10. Light-weight components according to Claim 1, characterised in that they are h-shaped (13).

11. Light-weight components according to Claims 1 to 10, characterised in that on at least one front surface they are coated with a visible or weatherproof material.

12. Light-weight components according to Claims 1 to 11, characterised in that they have a final coating of materials known per se.

13. Light-weight components according to Claim 12, characterised in that they are covered with plywood.

14. Light-weight components according to Claim 12, characterised in that they are covered with veneer.

15. Light-weight components according to Claim 12, characterised in that they are covered with sheeting.

16. Lightweight components according to Claim 12, characterised in that they are covered with cardboard.

17. Lightweight components according to Claim 12, characterised in that they have a coating of paint.

18. Lightweight components according to Claims 12 to 17, characterised in that the straw stalk fragments are pretreated and/or coated and/or impregnated with a flameretarding material known per se.

**Revendications**

1. Eléments de construction légers, pour des cloisons, des montants, des plafonds et autres éléments de construction, composés de morceaux de brins de paille qui sont agglomérés par des liants, caractérisés en ce que les morceaux de brins de paille fendus dans le sens de la longueur sont imprégnés d'un agent hydrophobe et le corps de des éléments de construction légers est pourvu de chambres d'aération qui s'étendent dans la direction longitudinale de l'élément de construction.

2. Eléments de construction légers selon la revendication 1, caractérisés en ce qu'ils présentent la forme d un panneau (1) dont le corps est pourvu de chambres d'aération (2).

3. Eléments de construction légers selon la revendication 1 ou 2, caractérisés en ce qu ils présentent la forme d'un panneau (3) comportant un rebord (4) périphérique sur trois arêtes et une rainure (5) située sur une arête.

4. Eléments de construction légers selon la revendication 2, caractérisés en ce qu'ils présentent la forme d un panneau (6) comportant un rebord (4) sur deux côtés opposés et une rainure (5) sur une arête.

5. Eléments de construction légers selon la revendication 1 ou 2, caractérisés en ce qu ils présentent la forme d'un panneau (7) dont l'arête intérieure du repli présente un biseau (8).

6. Eléments de construction légers selon la revendication 1, caractérisés en ce qu'ils présentent la forme d'un tube à section rectangulaire (9).

7. Eléments de construction légers selon la revendication 1, caractérisés en ce qu'ils présentent la forme d'un U (10).

8. Eléments de construction légers selon la revendication 1, caractérisés en ce qu'ils sont réalisés en forme de trapèze creux (11) avec un rebord des deux côtés.

9. Eléments de construction légers selon la revendication 1, caractérisés en ce qu'ils sont réalisés en forme de cornière (12).

10. Eléments de construction légers selon la revendication 1, caractérisés en ce qu'ils sont réalisés en forme de H (13).

11. Eléments de construction légers selon l'une des revendications 1 à 10, caractérisés en ce qu'ils sont recouverts d'un matériau optique et résistant aux intempéries au moins sur une face frontale.

12. Eléments de construction légers selon l'une des revendications 1 à 11, caractérisés en ce qu'ils présentent un revêtement terminal avec des moyens connus en soi.

13. Eléments de construction légers selon la revendication 12, caractérisés en ce qu'ils sont recouverts de contreplaqué.

14. Eléments de construction légers selon la revendication 12, caractérisés en ce qu'ils sont recouverts d'une feuille de placage.

15. Eléments de construction légers selon la revendication 12, caractérisés en ce qu'ils sont recouverts d'une feuille.

16. Eléments de construction légers selon la revendication 12, caractérisés en ce qu'ils sont recouverts de carton.

17. Eléments de construction légers selon la revendication 12, caractérisés en ce qu'ils présentent une couche de peinture.

18. Eléments de construction légers selon l'une des revendications 12 à 17, caractérisés en ce que les morceaux de brins de paille sont préalablement traités et/ou enduits et/ou imprégnés au moyen d'un agent ignifuge connu en soi.

*Fig. 1*

*Fig. 3*

*Fig. 2*

*Fig. 4*

_Fig.5_

_Fig.6_

*Fig. 8*

*Fig. 7*

Fig. 9

Fig. 10

Fig. 11

Fig. 12

Fig. 13

Fig. 14

10

Fig. 15